# EUROPEAN PATENT SPECIFICATION

(11) **EP 1 889 257 B1**
(45) Date of publication and mention of the grant of the patent: **14.07.2010**
(21) Application number: 06760058.5
(22) Date of filing: 17.05.2006
(51) Int. Cl.: G10L 21/02

(54) **A METHOD AND SYSTEM FOR RECORDING AN ELECTRONIC COMMUNICATION AND EXTRACTING CONSTITUENT AUDIO DATA THEREFROM**
VERFAHREN UND SYSTEM ZUM AUFZEICHNEN EINER ELEKTRONISCHEN KOMMUNIKATION UND ZUM EXTRAHIEREN VON AUDIOBESTANDTEILDATEN DARAUS
PROCEDE ET SYSTEME D'ENREGISTREMENT D'UNE COMMUNICATION ELECTRONIQUE ET D'EXTRACTION DE DONNEES AUDIO CONSTITUTIVES

(30) Priority: 18.05.2005 US 131844
(43) Date of publication of application: 20.02.2008
(73) Proprietor: Eloyalty Corporation, Lake Forest, IL 60045 (US)
(72) Inventor: WARFORD, Roger, Hoschton, GA 30548 (US); BROWN, Dougals, Austin, TX 78746 (US); SKEEN, William, Austin, TX 78749 (US); THOMAN, Christopher, Deerfield Beach, FL 33442 (US)
(74) Representative: Moore, Barry
(86) International application number: PCT/US2006/019166
(87) International publication number: WO 2006/125047

(56) References cited:
- US-A1- 2001 043 685
- US-B1- 6 691 073

## Description

### TECHNICAL FIELD

The invention relates to a communication network for recording an electronic audio communication, more particularly, to a method and system for separating constituent audio data within an electronic audio communication.

### BACKGROUND OF THE INVENTION

Methods for separating audio signals have emerged as a viable means of enhancing audio signal analysis. Current methods of audio separation include computational auditory scene analysis and blind source separation. Computational auditory scene analysis involves a process for separating speech signals from interfering sounds. Blind source separation requires source signals to be statistically independent and requires a linear mixing process. Often times blind source separation attempts to invert the mixing process in order to reconstruct the independent components of the audio signal.

One approach to capturing separate audio signals involves the analysis of a single monophonic track utilizing a variety of analytic tools. These tools provide a series of measurements of the audio data on the monophonic track in order to form inputs for pattern matching algorithms. Mathematical and physical information characterizing a series of user-defined models of acoustic processes, such as frequency analysis, are then utilized to determine separate events within the monophonic track. A pattern matching algorithm uses statistical and optimization methods to establish a model most consistent with the audio data on the track. The output of these processes represent a series of independent parameter sets that can be used to produce separate audio channels.
US 2002116187 describes how speech in the presence of noise is detected by first extracting at least one extracted speech signal from at least one received signal and extracting at least one extracted noise signal from the at least one received signal. A detected speech signal is generated based on both at least one extracted speech signal and on at least one extracted noise signal.
US 2001043685 describes a system and method for monitoring a telephone switching environment which simultaneously monitor both an SMDR link and a real-time CTI link, gather information about calls from both sources, and combine gathered information into a single data model of the telephony activity.

While these methods have met with varying degrees of success, there exists several limitations. For example, the above methodologies impair the ability to separate audio data while retaining the hi-fidelity of the audio data as initially recorded. Further, prior methodologies such as those described above may degrade the audio data as it is separated into constituent audio data files such that post separation analysis or manipulation is impaired, inaccurate or prevented.

The present invention is provided to solve the problems discussed above and other problems, and to provide advantages and aspects not previously provided. A full discussion of the features and advantages of the present invention is deferred to the following detailed description, which proceeds with reference to the accompanying drawings.

### SUMMARY OF THE INVENTION

Accordingly there is provided a method as detailed in claim 1. Advantageous embodiments are provided in the dependent claims. The present invention relates to a method for separating an audio signal: A signal is received from a communication system having a communication protocol. The signal carries an audio waveform comprising at least one of first constituent audio data and second constituent audio data. The signal is recorded on a first data file based on the identity of the telephonic communication protocol. The first constituent audio data is recorded on a first audio track of the first data file based on the communication protocol and the second constituent audio data is recorded on a second audio track of the first data file based on the communication protocol. At least one of the recorded first and second constituent audio data are extracted from the first data file.

The present invention further includes a method for separating an audio stream carried by a signal. The method includes identifying the communication protocol utilized by a network. It further includes receiving a signal from a telephonic communication system. The signal carries an audio waveform comprising at least one of first constituent audio data and second constituent audio data. The signal carrying the audio waveform is recorded based on the communication protocol wherein the first constituent audio data is recorded on a first audio track of a first data file and the second constituent audio data is recorded on a second audio track of the first data file.

The method described can be embodied in a computer program stored on a computer readable media. The a computer program would include code segments or routines to enable all of the functional aspects of the interface described or shown herein.

Other features and advantages of the invention will be apparent from the following specification taken in conjunction with the following drawings.

### BRIEF DESCRIPTION OF THE DRAWINGS

To understand the present invention, it will now be described by way of example, with reference to the accompanying drawings in which:
FIG. 1 is a block diagram of a telephonic communication system according to the present invention;
FIG. 2 is a block diagram of a telephonic communication system according to the present invention;
FIG. 3 is a block diagram of a telephonic communication system with a multi-port PSTN module according to the present invention;
FIG. 4 is a block diagram of a computer used in connection with the present invention; and,
FIG. 5 is a flow chart illustrating the process of recording and separating a telephonic communication in accordance with the present invention.

### DETAILED DESCRIPTION

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

The system and method of the present invention is configured to postpone audio compression until analysis of the audio data is complete. The system and method employed in connection with the present invention also minimizes audio distortion, increases fidelity, eliminates gain control and requires no additional filtering of the signal.

The process descriptions or blocks shown in the figures of the present invention should be understood as representing modules, segments, or portions of code which include one or more executable instructions for implementing specific logical functions or steps in the process. Alternate implementations are included within the scope of the embodiments of the present invention in which functions may be executed out of order from that shown or discussed, including substantially concurrently or in reverse order, depending on the functionality involved, as would be understood by those having ordinary skill in the art.

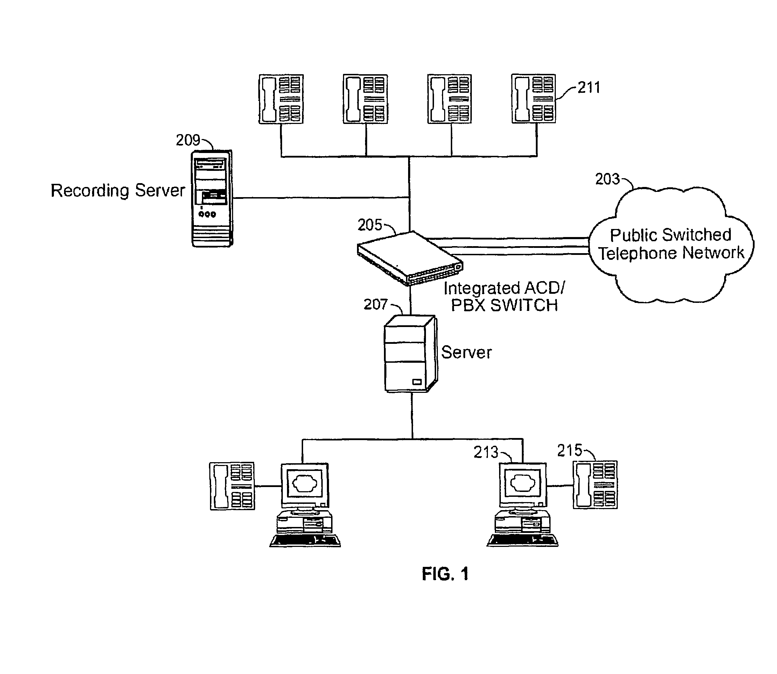

FIG. 1 illustrates a telephonic communication system 201, such as a distributed private branch exchange (PBX), having a public switched telephone network (PSTN) 203 connected to the PBX through a PBX switch 205.

The PBX switch 205 provides an interface between the PSTN 203 and a local network. Preferably, the interface is controlled by software stored on a telephony server 207 coupled to the PBX switch 205. The PBX switch 205, using interface software, connects trunk and line station interfaces of the public switch telephone network 203 to stations of a local network or other peripheral devices contemplated by one skilled in the art. Further, in another embodiment of the invention, the PBX switch may be integrated within telephony server 207. The stations of the invention may include various types of communication devices connected to the network, including the telephony server 207, a recording server 209, telephone stations 211, and client personal computers 213 equipped with telephone stations 215. The local network may further include fax machines and modems.

Generally, in terms of hardware architecture, the telephony server 207 includes a processor, memory, and one or more input and/or output (I/O) devices (or peripherals) that are communicatively coupled via a local interface. The processor can be any custom-made or commercially available processor, a central processing unit (CPU), an auxiliary processor among several processors associated with the telephony server 207, a semiconductor based microprocessor (in the form of a microchip or chip set), a macroprocessor, or generally any device for executing software instructions. The memory of the telephony server 207 can include any one or a combination of volatile memory elements (e.g., random access memory (RAM, such as DRAM, SRAM, SDRAM, etc.)) and nonvolatile memory elements (e.g., ROM, hard drive, tape, CDROM, etc.). The telephony server 207 may further include a keyboard and a mouse for control purposes, and an attached graphic monitor for observation of software operation.

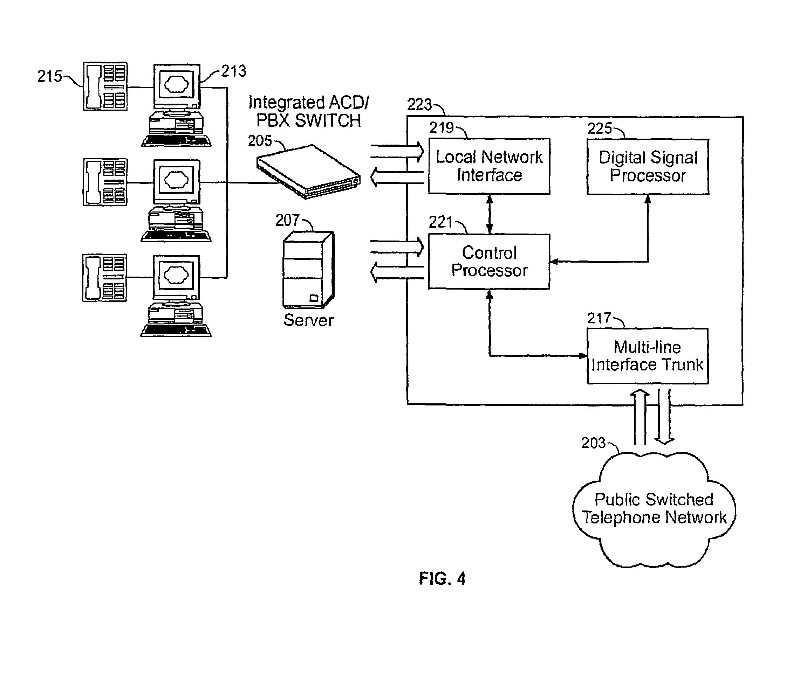

The telephony server 207 incorporates PBX control software to control the initiation and termination of connections between stations and via outside trunk connections to the PSTN 203. In addition, the software may monitor the status of all telephone stations 211 in real-time on the network and may be capable of responding to telephony events to provide traditional telephone service. This may include the control and generation of the conventional signaling tones such as dial tones, busy tones, ring back tones, as well as the connection and termination of media streams between telephones on the local network. Further, as shown in FIG. 4, the PBX control software may use a multi-port module 223 and PCs to implement standard PBX functions such as the initiation and termination of telephone calls, either across the network or to outside trunk lines, the ability to put calls on hold, to transfer, park and pick up calls, to conference multiple callers, and to provide caller ID information. Telephony applications such as voice mail and auto attendant may be implemented by application software using the PBX as a network telephony services provider.

Referring to FIG. 4, in one embodiment, the telephony server 207 is equipped with multi-port PSTN module 223 having circuitry and software to implement a trunk interface 217 and a local network interface 219. The PSTN module 223 comprises a control processor 221 to manage the transmission and reception of network messages between the PBX switch 205 and the telephony network server 207. The control processor 221 is also capable of directing network messages between the PBX switch 205, the local network interface 291, the telephony network server 207, and the trunk interface 217. In one embodiment, the local network is a VoIP enabled network and uses the Transmission Control Protocol/Internet Protocol (TCP/IP). The network messages may contain computer data, telephony transmission supervision, signaling and various media streams, such as audio data and video data. The control processor 221 directs network messages containing computer data from the PBX switch 205 to the telephony network server 207 directly through the multi-port PSTN module 223.

The control processor 221 may include buffer storage and control logic to convert media streams from one format to another, if necessary, between the trunk interface 217 and local network. The trunk interface 217 provides interconnection with the trunk circuits of the PSTN 203. The local network interface 219 provides conventional software and circuitry to enable the telephony server 207 to access the local network. The buffer RAM and control logic implement efficient transfer of media streams between the trunk interface 217, the telephony server 207, the digital signal processor 225, and the local network interface 219.

The trunk interface 217 utilizes conventional telephony trunk transmission supervision and signaling protocols required to interface with the outside trunk circuits from the PSTN 203. The trunk lines carry various types of telephony signals such as transmission supervision and signaling, audio, fax, or modem data to provide plain old telephone service (POTS). In addition, the trunk lines may carry other communication formats such T1, ISDN or fiber service to provide telephony or multimedia data images, video, text or audio.

The control processor 221 manages real-time telephony event handling pertaining to the telephone trunk line interfaces, including managing the efficient use of digital signal processor resources for the detection of caller ID, DTMF, call progress and other conventional forms of signaling found on trunk lines. The control processor 221 also manages the generation of telephony tones for dialing and other purposes, and controls the connection state, impedance matching, and echo cancellation of individual trunk line interfaces on the multi-port PSTN module 223.

Preferably, conventional PBX signaling is utilized between trunk and station, or station and station, such that data is translated into network messages that convey information relating to real-time telephony events on the network. The data could also be translated into instructions to the network adapters of the stations to generate the appropriate signals and behavior to support normal voice communication, or instructions to connect voice media streams using standard connections and signaling protocols. Network messages are sent from the control processor 221 to the telephony server 207 to notify the PBX software in the telephony server 207 of real-time telephony events on the attached trunk lines. Other network messages are received from the PBX Switch 205 to implement telephone call supervision and may control the set-up and elimination of media streams for voice transmission.

The local network interface 219 includes conventional circuitry to interface with the local network. The specific circuitry is dependent on the signal protocol utilized in the local network. In one embodiment, the local network may be a local area network (LAN) utilizing IP telephony. IP telephony integrates audio and video stream control with legacy telephony functions and may be supported through the H.323 protocol. H.323 is an International Telecommunication Union-Teleconununications protocol used to provide voice and video services over data networks. H.323 permits users to make point-to-point audio and video phone calls over a local area network. IP telephony systems can be integrated with the public telephone system through a local network interface 219, such as an IP/PBX-PSTN gateway, thereby allowing a user to place telephone calls from an enabled computer. For example, a call from an IP telephony client to a conventional telephone would be routed on the LAN to the IP/PBX-PSTN gateway. The IP/PBX-PSTN gateway translates H.323 protocol to conventional telephone protocol and routes the call over the conventional telephone network to its destination. Conversely, an incoming call from the PSTN 203 is routed to the IP/PBX-PSTN gateway and translates the conventional telephone protocol to H.323 protocol.

As noted above, PBX trunk control messages are transmitted from the telephony server 207 to the control processor 221 of the nnilti-port PSTN. In contrast, network messages containing media streams of digital representations of real-time voice are transmitted between the trunk interface 217 and local network interface 219 using the digital signal processor 225. The digital signal processor 225 may include buffer storage and control logic. Preferably, the buffer storage and control logic implement a first-in-first-out (FIFO) data buffering scheme for transmitting digital representations of voice audio between the local network to the trunk interface 217. It is noted that the digital signal processor 225 may be integrated with the control processor 221 on a single microprocessor.

The digital signal processor 225 may include a coder/decoder (CODEC) connected to the control processor 221. The CODEC may be a type TCM29c13 integrated circuit made by Texas Instruments, Inc. In one embodiment, the digital signal processor 225 receives an analog or digital voice signal from a station within the network or from the trunk lines of the PSTN 203. The CODEC converts the analog voice signal into in a digital from, such as digital data packets. It should be noted that the CODEC is not used when connection is made to digital lines and devices, such as VoIP networks. From the CODEC, the digital data is transmitted to the digital signal processor 225 where telephone functions take place. The digital data is then passed to the control processor 221 which accumulates the data bytes from the digital signal processor 225. It is preferred that the data bytes are stored in a first-in-first-out (FIFO) memory buffer until there is sufficient data for one data packet to be sent according to the particular network protocol of the local network. The specific number of bytes transmitted per data packet depends on network latency requirements as selected by one of ordinary skill in the art. Once a data packet is created, the data packet is sent to the appropriate destination on the local network through the local network interface 219. Among other information, the data packet contains a source address, a destination address, and audio data. The source address identifies the location the audio data originated from and the destination address identifies the location the audio data is to be sent.

The system permits bi-directional communication by implementing a return path allowing data from the local network, through the local network interface 219, to be sent to the PSTN 203 through the multi-line PSTN trunk interface 217. Data streams from the local network are received by the local network interface 219 and translated from the protocol utilized on the local network to the protocol utilized on the PSTN 203. The conversion of data may be performed as the inverse operation of the conversion described above relating to the IP/PBX-PSTN gateway. The data stream is restored in appropriate form suitable for transmission through to either a connected telephone 211, 215 or an interface trunk 217 of the PSTN module 223, or a digital interface such as a T1 line or ISDN. In addition, digital data may be converted to analog data for transmission over the PSTN 203.

Generally, the PBX switch of the present invention may be implemented with hardware or virtually. A hardware PBX has equipment located local to the user of the PBX system. The PBX switch 205 utilized may be a standard PBX manufactured by Avaya, Siemens AG, NEC, Nortel, Toshiba, Fujitsu, Vodavi, Mitel, Ericsson, Panasonic, or InterTel. In contrast, a virtual PBX has equipment located at a central telephone service provider and delivers the PBX as a service over the PSTN 203.

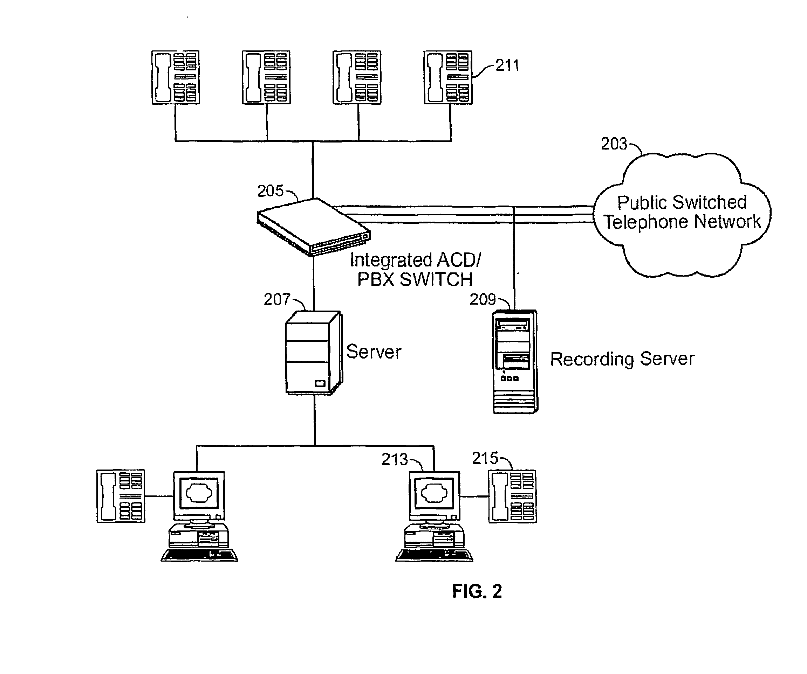

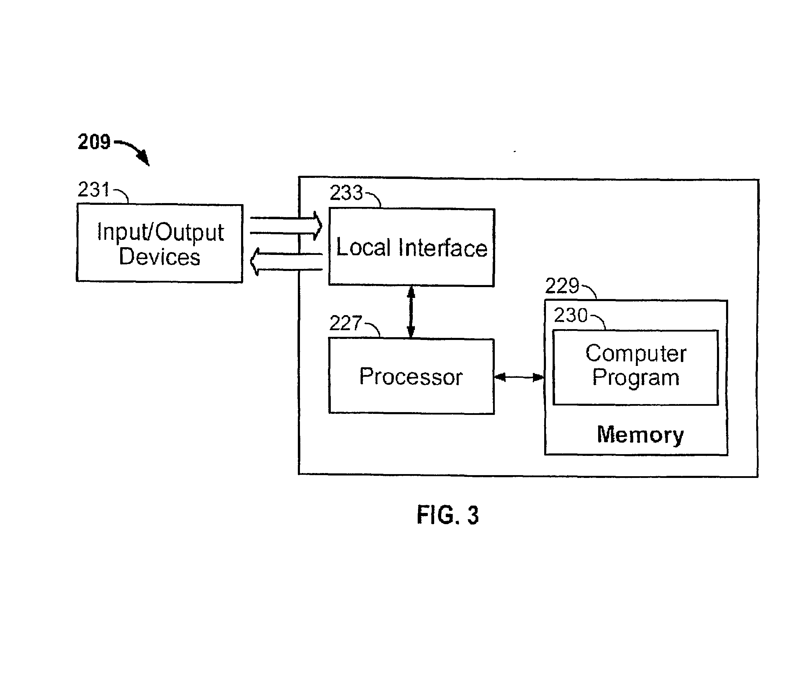

As illustrated in FIG. 1, the system includes a recording server 209 for recording and separating network messages transmitted within the system. The recording server 209 may be connected to a port on the local network, as shown in FIG. 1. Alternatively, the recording server 209 may be connected to the PSTN trunk line as illustrated in FIG. 2. The recording server 209 includes a control system software, such as recording software 230. The recording software 230 of the invention can be implemented in software (e.g., firmware), hardware, or a combination thereof. In the currently contemplated best mode, the recording software 230 is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. An example of a general purpose computer that can implement the recording software 230 of the present invention is shown in FIG. 3. The recording software 230 may reside in, or have portions residing in, any computer such as, but not limited to, a general purpose personal computer. Therefore, recording server 209 of FIG. 3 may be representative of any type of computer in which the recording software 230 resides or partially resides.

FIG. 3 is a block diagram of a computer or server 12. For purposes of understanding the hardware as described herein, the terms "computer," "server" and "recording server" have identical meanings and are interchangeably used. Recording server 209 includes control system 230. For purposes of understanding the hardware as described herein, the terms "control system" and "recording software 230" have identical meanings and are interchangeably used. The control system 230 of the invention can be implemented in software (e.g., firmware), hardware, or a combination thereof. In the currently contemplated best mode, the control system 230 is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. An example of a general purpose computer that can implement the control system 230 of the present invention is shown in FIG. 4. The control system 230 may reside in, or have portions residing in, any computer such as, but not limited to, a general purpose personal computer. Therefore, recording server 209 of FIG. 4 may be representative of any computer in which the control system 230 resides or partially resides.

Generally, in terms of hardware architecture, as shown in FIG. 3, the recording server 209 includes a processor 227, memory 229, and one or more input and/or output (I/O) devices 231 (or peripherals) that are communicatively coupled via a local interface 233. The local interface 233 can be, for example, but not limited to, one or more buses or other wired or wireless connections, as is known in the art. The local interface 233 may have additional elements, which are omitted for simplicity, such as controllers, buffers (caches), drivers, repeaters, and receivers, to enable communications. Further, the local interface may include address, control, and/or data connections to enable appropriate communications among the other computer components.

The processor 227 is a hardware device for executing software, particularly software stored in memory 229. The processor 227 can be any custom made or commercially available processor, a central processing unit (CPU), an auxiliary processor among several processors associated with the recording server 209, a semiconductor based microprocessor (in the form of a microchip or chip set), a macroprocessor, or generally any device for executing software instructions. Examples of suitable commercially available microprocessors are as follows: a PA-RISC series microprocessor from Hewlett-Packard Company, an 80x8 or Pentium series microprocessor from Intel Corporation, a PowerPC microprocessor from IBM, a Sparc microprocessor from Sun Microsystems, Inc., or a 8xxx series microprocessor from Motorola Corporation.

The memory 229 can include any one or a combination of volatile memory elements (e.g., random access memory (RAM, such as DRAM, SRAM, SDRAM, etc.)) and nonvolatile memory elements (e.g., ROM, hard drive, tape, CDROM, etc.). Moreover, memory 229 may incorporate electronic, magnetic, optical, and/or other types of storage media. The memory 229 can have a distributed architecture where various components are situated remote from one another, but can be accessed by the processor 227.

The software in memory 229 may include one or more separate programs, each of which comprises an ordered listing of executable instructions for implementing logical functions. In the example of FIG. 3, the software in the memory 229 includes the control system 230 in accordance with the present invention and a suitable operating system (O/S) 24. A non-exhaustive list of examples of suitable commercially available operating systems 24 is as follows: (a) a Windows operating system available from Microsoft Corporation; (b) a Netware operating system available from Novell, Inc.; (c) a Macintosh operating system available from Apple Computer, Inc.; (d) a UNIX operating system, which is available for purchase from many vendors, such as the Hewlett-Packard Company, Sun Microsystems, Inc., and AT&T Corporation; (e) a LINUX operating system, which is freeware that is readily available on the Internet; (f) a run time Vxworks operating system from WindRiver Systems, Inc.; or (g) an appliance-based operating system, such as that implemented in handheld computers or personal digital assistants (PDAs) (e.g., PalmOS available from Palm Computing, Inc., and Windows CE available from Microsoft Corporation). The operating system 24 essentially controls the execution of other computer programs, such as the control system 230, and provides scheduling, input-output control, file and data management, memory management, and communication control and related services.

The control system 230 may be a source program, executable program (object code), script, or any other entity comprising a set of instructions to be performed. When a source program, the program needs to be translated via a compiler, assembler, interpreter, or the like, which may or may not be included within the memory 229, so as to operate properly in connection with the O/S 24. Furthermore, the control system 230 can be written as (a) an object oriented programming language, which has classes of data and methods, or (b) a procedure programming language, which has routines, subroutines, and/or functions, for example but not limited to, C, C++, Pascal, Basic, Fortran, Cobol, Perl, Java, and Ada. In one embodiment, the control system 230 is written in C++. The I/O devices 231 may include input devices, for example but not limited to, a keyboard, mouse, scanner, microphone, touch screens, interfaces for various medical devices, bar code readers, stylus, laser readers, radiofrequency device readers, etc. Furthermore, the I/O devices 231 may also include output devices, for example but not limited to, a printer, bar code printers, displays, etc. Finally, the I/O devices 231 may further include devices that communicate both inputs and outputs, for instance but not limited to, a modulator/demodulator (modem; for accessing another device, system, or network), a radio frequency (RF) or other transceiver, a telephonic interface, a bridge, a router, etc.

If the recording server 209 is a PC, workstation, PDA, or the like, the software in the memory 229 may further include a basic input output system (BIOS) (not shown in FIG. 4). The BIOS is a set of software routines that initialize and test hardware at startup, start the O/S 24, and support the transfer of data among the hardware devices. The BIOS is stored in ROM so that the BIOS can be executed when the recording server 209 is activated.

When the recording server 209 is in operation, the processor 227 is configured to execute software stored within the memory 229, to communicate data to and from the memory 229, and to generally control operations of the recording server 209 pursuant to the software. The control system 230 and the O/S 24, in whole or in part, but typically the latter, are read by the processor 227, perhaps buffered within the processor 227, and then executed.

When the control system 230 is implemented in software, as is shown in FIG. 4, it should be noted that the control system 230 can be stored on any computer readable medium for use by or in connection with any computer related system or method. In the context of this document, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via, for instance, optical scanning of the paper or other medium, then compiled, interpreted or otherwise processed in a suitable manner if necessary, and then stored in a computer memory. The control system 230 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

In another embodiment, where the control system 230 is implemented in hardware, the control system 230 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

As noted above, the recording server 209 incorporates recording software 230 for recording and separating a signal based on the source address and/or destination address of the signal. The method utilized by the recording server 209 depends on the communication protocol utilized on the communication lines to which the recording server 209 is coupled. In the communication system contemplated by the present invention, the signal carrying audio data of a communication between at least two users may be an analog signal or a digital signal in the form of a network message. In one embodiment, the signal is an audio data transmitted according to a signaling protocol, for example the H.323 protocol described above.

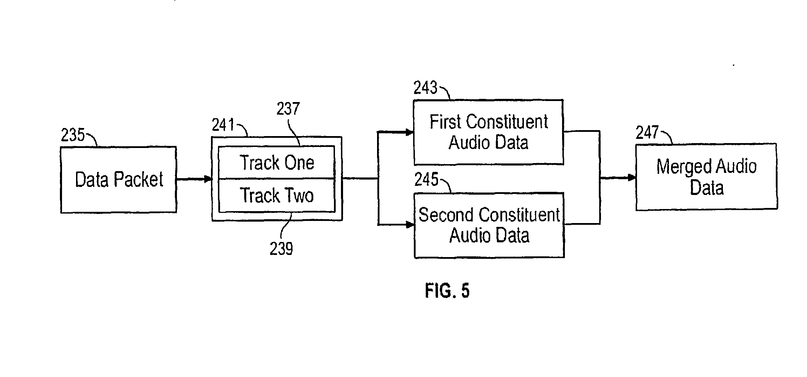

An example of a communication between an outside caller and a call center agent utilizing the present system 200 is illustrated in FIG. 5 and described herein. In the embodiment of FIG. 5, when an outside caller reaches the system through the multi-line interface trunk 217, their voice signal is digitized (if needed) in the manner described above, and converted into digital data packets 235 according to the communication protocol utilized on the local network of the system. The data packet 235 comprises a source address identifying the address of the outside caller, a destination address identifying the address of the call center agent, and first constituent audio data comprising at least a portion of the outside callers voice. The data packet 235 can further comprise routing data identifying how the data packet 235 should be routed through the system and other relevant data. Once the data packet 235 is created, the data packet 235 is sent to the appropriate destination on the local network, such as to a call center agent, through the local network interface 219. The PBX and/or an automatic call distributor (ACD) can determine the initial communication setup, such as the connection state, impedance matching, and echo cancellation, according to predetermined criteria.

Similar to the process described above, when the call center agent speaks, their voice is digitized (if needed) and converted into digital data packet 235 according to the communication protocol utilized on the local network. The data packet 235 comprises a source address identifying the address of the call center agent, a destination address identifying the address of the outside caller, and second constituent audio data comprising at least a portion of the call center agent's voice. The data packet 235 is received by the local network interface 219 and translated from the communication protocol utilized on the local network to the communication protocol utilized on the PSTN 203. The conversion of data can be performed as described above. The data packet 235 is restored in appropriate form suitable for transmission through to either a connected telephone 211, 215 or a interface trunk 217 of the PSTN module 223, or a digital interface such as a T1 line or ISDN. In addition, digital data can be converted to analog data for transmission through the PSTN 203.

The recording server 209 receives either a data packet 235 comprising: the source address identifying the address of the outside caller, a destination address identifying the address of the call center agent, and the first constituent audio data comprising at least a portion of the outside callers voice; or a data packet 235 comprising a source address identifying the address of the call center agent, a destination address identifying the address of the outside caller, and second constituent audio data comprising at least a portion of the customer's agent voice. It is understood by one of ordinary skill in the art that the recording server 209 is programmed to identify the communication protocol utilized by the local network and extract the audio data within the data packet 235. In one embodiment, the recording server 209 can automatically identify the utilized communication protocol from a plurality of communication protocols. The plurality of communication protocols can be stored in local memory or accessed from a remote database.

The recording server 209 comprises recording software 230 to record the communication session between the outside caller and the call center agent in a single data file in a stereo format. The first data file 241 has at least a first audio track 237 and a second audio track 237. Once a telephone connection is established between an outside caller and a call center agent, the recording software 230 creates a first data file 241 to record the communication between the outside caller and the call center agent. It is contemplated that the entire communication session or a portion of the communication session can be recorded.

Upon receiving the data packet 235, the recording server 209 determines whether to record the audio data contained in the data packet 235 in either the first audio track 237 or the second audio track 239 of the first data file 241 as determined by the source address, destination address, and/or the audio data contained within the received data packet 235. In one embodiment, if the data packet 235 comprises a source address identifying the address of the outside caller, a destination address identifying the address of the call center agent, and first constituent audio data, the first constituent audio data is recorded on the first audio track 237 of the first data file 241. Similarly, if the data packet 235 comprises a source address identifying the address of the call center agent, a destination address identifying the address of the outside caller, and second constituent audio data, the second constituent audio data is recorded on the second audio track 239 of the first data file 241. It should be noted the first and second constituent audio data can be a digital or analog audio waveform or a textual translation of the digital or analog waveform. The recording process is repeated until the communication link between the outside caller and call center agent is terminated.

As noted above, the recording server 209 can be connected to the trunk lines of the PSTN 203 as seen in FIG. 2. The PSTN 203 can utilize a different protocol and therefore, the recording server 209 is configured to identify the communication protocol utilized by the PSTN 203, recognize the source and destination address of a signal and extract the audio data from the PSTN 203. The recording server 209 is programmed in a manner as known to one of ordinary skill in the art.

As shown in FIG. 5, once the communication link is terminated, the recording server 209 ends the recording session and stores the single data file having the recorded communication session in memory. After the first data file is stored in memory, the recording server 209 can extract either or both of the first constituent audio data from the first audio track of the first data file or the second constituent audio data from the second audio track of the first data file. In one embodiment, the first constituent audio data extracted from the first audio track is stored in a first constituent data file 243. Similarly, the second constituent audio data extracted from the second audio track can be stored in a second constituent data file 245. The first and second constituent data files 243, 245 can be compressed before being stored in memory. The extracted data can be in the form of a digital or analog audio waveform or can be a textual translation of the first or second constituent audio data. It is contemplated that either or both of the first constituent data file 243 or the second constituent data file 245 can be further analyzed or processed. For example, among other processes and analyses, filtering techniques can be applied to the first constituent data file and/or the second constituent data file. Moreover, event data, such as silence periods or over-talking, can be identified through analysis techniques known to those skilled in the art.

Further, as illustrated in FIG. 5, the first constituent data file 243 and second constituent data file 245 can be merged together into a single second data file 247. The first and second constituent data files can be merged in a stereo format where the first constituent audio data from the first constituent data file 243 is stored on a first audio track of the second data file 247 and the second constituent audio data from the second constituent data file 245 is stored on a second audio track of the second data file 247. Alternatively, the first and second constituent data files can be merged in a mono format where the first constituent audio data from the first constituent data file 243 and the second constituent audio data from the second constituent data file 245 are stored on a first audio track of the second data file 247. Additionally, the first and second constituent audio data can be merged into a document having a textual translation of the audio data. In such a case, identifiers can be associated with each of the merged first and second constituent audio data in order to associate the merged first constituent audio data with the outside caller, and associate the merged second constituent audio data with the call center agent. The second data file 247 can be compressed before being stored in memory.

While the specific embodiments have been illustrated and described, the scope of protection is only limited by the scope of the accompanying Claims.

## Claims

1. A method for separating an audio signal, the method providing for receiving a signal (235) from a communication system (201) having a communication protocol at a computer (209), the signal comprising at least one of first constituent audio data and second constituent audio data, and the method **characterized by**:
providing for recording the signal on a first data file (241) stored in the computer based on the identity of the communication protocol, the step of recording comprising: providing for recording the first constituent audio data on a first audio track (237) of a first data file (241) based on the communication protocol; and,
providing for recording the second constituent audio data on a second audio track (239) of the first data file (241) based on the communication protocol.

2. The method of claim 1 wherein the first constituent audio data has a first identifier associated therewith.

3. The method of claim 1 further comprising the step of merging the first constituent audio data and the second constituent audio data into a second data file (247) stored on the computer.

4. The method of claim 1 wherein the first constituent audio data and the second constituent audio data are merged into the second data file (247) stored on the computer in one of either a stereo format and a mono format.

5. The method of claim 1 further comprising the step of extracting at least one of the recorded first and second constituent audio data from the first data file (241) at a computer.

6. The method of claim 5 wherein after the extracting step, the method further comprising the step of storing the at least one of the first extracted first (243) and second constituent audio data (245) in a first constituent data file on the computer.

7. The method of claim 1 wherein the communication protocol is one of a plurality of communication protocols, the method further comprising the step of automatically identifying the communication protocol.

8. The method of claim 7 wherein the communication protocol is identified from one of either a public switch telephone network (203) and a local network.

9. The method of claim 1 wherein the signal is one of either an analog signal and a digital signal.

10. A computer readable medium (230) adapted to control a computer and comprising a plurality of code segments which when executed on the computer are configured for carrying out the method steps of any one of claims 1 to 9.

## Patentansprüche

1. Verfahren zum Separieren eines Audiosignals, wobei das Verfahren vorsieht, ein Signal (235) von einem Kommunikationssystem (201) mit einem Übertragungsprotokoll auf einem Computer (209) zu empfangen, wobei das Signal erste, einen Teil bildende Audiodaten und/oder zweite, einen Teil bildende Audiodaten umfasst, und das Verfahren **dadurch gekennzeichnet ist, dass**:
das Aufzeichnen des Signals in einer ersten Datei (241), die in dem Computer basierend auf der Identität des Übertragungsprotokolls gespeichert wird, vorgesehen ist, wobei der Schritt des Aufzeichnens umfasst: das Aufzeichnen der ersten, einen Teil bildenden Audiodaten auf einer ersten Audiospur (237) einer ersten Datei (241) basierend auf dem Übertragungsprotokoll vorzusehen; und
das Aufzeichnen der zweiten, einen Teil bildenden Audiodaten auf einer zweiten Audiospur (239) der ersten Datei (241) basierend auf dem Übertragungsprotokoll vorzusehen.

2. Verfahren nach Anspruch 1, bei dem die ersten, einen Teil bildenden Audiodaten ein erstes, damit verknüpftes Kennzeichen aufweisen.

3. Verfahren nach Anspruch 1, des Weiteren mit dem Schritt des Kombinierens der ersten, einen Teil bildenden Audiodaten und der zweiten, einen Teil bildenden Audiodaten zu einer zweiten Datei (247), die auf dem Computer gespeichert wird.

4. Verfahren nach Anspruch 1, bei dem die ersten, einen Teil bildenden Audiodaten und die zweiten, einen Teil bildenden Audiodaten zu der zweiten Datei (247) kombiniert werden, die auf dem Computer entweder in einem Stereoformat oder einem Monoformat gespeichert wird.

5. Verfahren nach Anspruch 1, des Weiteren mit dem Schritt des Herausziehens der aufgezeichneten ersten und/oder zweiten, einen Teil bildenden Audiodaten aus der ersten Datei (241) an einem Computer.

6. Verfahren nach Anspruch 5, bei dem nach dem Schritt des Herausziehens das Verfahren des Weiteren den Schritt des Speicherns der zuerst herausgezogenen ersten (243) und/oder zweiten, einen Teil bildenden Audiodaten (245) in einer ersten, einen Teil bildenden Datei auf dem Computer umfasst.

7. Verfahren nach Anspruch 1, bei dem das Übertragungsprotokoll eines von einer Vielzahl von Übertragungsprotokollen ist, wobei das Verfahren des Weiteren den Schritt des automatischen Feststellens des Übertragungsprotokolls umfasst.

8. Verfahren nach Anspruch 7, bei dem das Übertragungsprotokoll entweder von einem öffentlichen Fernsprechnetz (203) oder einem Ortsnetz festgestellt wird.

9. Verfahren nach Anspruch 1, bei dem das Signal entweder ein analoges Signal oder ein digitales Signal ist.

10. Computerlesbares Medium (230), das zum Steuern eines Computers ausgelegt ist und eine Vielzahl von Codesegmenten aufweist, die bei Ausführung auf dem Computer konfiguriert werden, um die Verfahrensschritte nach einem der Ansprüche 1 bis 9 durchzuführen.

## Revendications

1. Procédé pour la séparation d'un signal audio, le procédé assurant la réception sur un ordinateur (209) d'un signal (235) depuis un système de communication (201) utilisant un protocole de communication, le signal comprenant au moins des premières données audio ou des secondes données audio, le procédé étant **caractérisé par le fait que** :
. on assure l'enregistrement du signal dans un premier fichier de données (241) mémorisé dans l'ordinateur, et basé sur l'identité du protocole de communication, l'étape d'enregistrement comprenant :
. l'enregistrement des premières données audio sur une première piste audio (237) du premier fichier de données (241) basé sur le protocole de communication ;
. et, l'enregistrement des secondes données audio sur une deuxième piste audio (239) du premier fichier de données (241) basé sur le protocole de communication.

2. Procédé selon la revendication 1 dans lequel les premières données audio possèdent un premier identifiant qui leur est associé.

3. Procédé selon la revendication 1 qui comprend en outre une étape de fusion des premières et des deuxièmes données audio en un second fichier de données (247) mémorisé sur l'ordinateur.

4. Procédé selon la revendication 1 dans lequel les premières données audio et les secondes données audio sont fusionnées dans le second fichier de données (247) mémorisé sur l'ordinateur, soit dans un format stéréo, soit dans un format mono.

5. Procédé selon la revendication 1 qui comprend en outre une étape d'extraction d'au moins un des premières ou deuxièmes données enregistrées à partir du premier fichier de données (241) présent sur l'ordinateur.

6. Procédé selon la revendication 5 dans lequel après l'étape d'extraction, le procédé comprend en outre une étape de mémorisation d'au moins des premières (243) ou secondes données audio extraites dans un premier fichier de données consécutives sur l'ordinateur.

7. Procédé selon la revendication 1 dans lequel le protocole de communication fait partie d'un ensemble de protocoles de communication, le procédé comprenant en outre une étape d'identification automatique du protocole de communication.

8. Procédé selon la revendication 7 dans lequel le protocole de communication est identifié à partir soit d'un réseau public de téléphonie commuté (203) ou d'un réseau local.

9. Procédé selon la revendication 1 dans lequel le signal est soit un signal analogique, soit un signal numérique.

10. Support lisible par un ordinateur (230), adapté pour la commande d'un ordinateur, et comprenant une pluralité de segments de code qui, lorsqu'ils sont exécutés par l'ordinateur, sont agencés pour effectuer les étapes du procédé de l'une quelconque des revendications 1 à 9.
